# EUROPEAN PATENT APPLICATION

(11) **EP 1 708 453 A1**
(43) Date of publication of application: **04.10.2006**
(21) Application number: 06006143.9
(22) Date of filing: 24.03.2006
(51) Int. Cl.: H04L 29/06, G06F 17/30

(54) **Digital content distribution system**

(30) Priority: 30.03.2005 JP 2005099215
(71) Applicant: HITACHI, LTD., Chiyoda-ku Tokyo 100-8280 (JP)
(72) Inventor: Nakazawa, Hideo, Hitachi, Ltd. Intel.Prop. Group, Chiyoda-ku, Tokyo 100-8220 (JP); Nishimura, Yoshihide, Hitachi, Ltd. Int Prop Group, Chiyoda-ku, Tokyo 100-8220 (JP); Kitta, Haruhito, Hitachi, Ltd. Int. Prop. Group, Chiyoda-ku, Tokyo 100-8220 (JP); Kina, Sadayuki, Hitachi, Ltd. Int.Prop. Group, Chiyoda-ku, Tokyo 100-8220 (JP)
(74) Representative: Strehl Schübel-Hopf & Partner

(57) **Abstract**

In the setting of distribution contents and distribution time of digital content, data processing efficiency is increased and operability are improved for users. Distribution processing is efficiently executed according to, for example, a position of a portable terminal, and excellent usability is realized for digital content and advertisements. To solve the problem, a system includes a distribution table storage section (110) to store for each portable terminal user a distribution table (1000) in which distribution desired digital content identified by designation regarding distribution desired digital content is listed in time series, and a distribution processing section (111) for distributing, when request information of distribution is received from a portable terminal (200), the distribution desired digital content listed in the distribution table (1000) to the portable terminal (200).

## Description

### BACKGROUND OF THE INVENTION

The present invention relates to a technique to distribute generally called digital content to terminals, and in particular, to a digital content distribution system, a digital content distribution method, a digital content distribution program, and a portable terminal.

There have been proposed techniques to distribute digital content including advertisements from, for example, a server to a portable terminal. For example, U.S.P. Application Publication No. US2002/0099769A1 (JP-A-2002-216021) describes a technique aiming at providing a server system which distributes, particularly to a user of a portable mobile information terminal, advertisement information or the like deeply associated with an area in which the portable mobile information terminal exists. For this purpose, the technique provides a server system for distributing information to portable mobile information terminals in a specific area. The service system includes a first database for storing the information of the specific area where the information distribution services are provided to registered users of the portable mobile information terminals, a second database for storing prepared information to be distributed and distribution conditions provided by an information provider, a third database for storing the registered users and the conditions for receiving the distributed information, a unit for receiving position information from the portable mobile information terminals of the registered users, a determining unit for determining whether or not the received position information is located in a specified area stored in the first data base, and an information distribution unit for distributing the prepared information satisfying the distribution conditions stored in the second database and the receiving conditions of the users stored in the third database, to the portable mobile information terminals of the users determined by the determining unit that the portable mobile information terminals are located in the area.

### SUMMARY OF THE INVENTION

However, according to the prior art, there has not been established operability for the portable terminal user side to freely set the contents and the distribution time of digital content to be distributed from a digital content distribution source to the portable terminals. Additionally, to set the distribution contents for the content distribution in advance, the data size of data to be communicated between the portable terminals and the digital content distribution system is not small. This possibly leads to a fear of causing communication band congestion depending on a system size of the portable terminal users and the setting frequency. Furthermore, there has not been proposed a technique for efficiently distribute, together with digital content, advertisement information corresponding to a current position or a temporary position of the portable terminal. In addition, there have not been proposed techniques developed in consideration of visibility of digital content supplied to be browsed by the portable terminal users, a display method pursuing the visibility, and usability on the portable terminal user side for the instruction and selection processing in association with the digital content and the advertisement information displayed on the portable terminals.

It is therefore an object of the present invention, which has been devised in consideration of the problems, to provide a digital content distribution system, a digital content distribution method, a digital content distribution program, and a portable terminal wherein the data processing efficiency is increased and the operability are improved in an operation to set the distribution contents and the distribution time of digital content, and effective distribution processing corresponding to, for example, a position of a portable terminal and excellent usability for digital content and advertisements can be implemented.

To solve the problem according to the present invention, there is provided a digital content distribution system for distributing digital content to a portable terminal including a distribution table storage section for storing a distribution table in a distribution table database for each portable terminal user, the distribution table including distribution desired digital content which is identified by designation regarding distribution desired digital content and which is listed in time series and a distribution processing section for distributing, when request information requesting distribution is received from the portable terminal, the distribution desired digital content listed in the distribution table to the portable terminal.

The digital content distribution system favorably includes a user IDentifier (ID) receiving section for receiving a portable terminal user ID as the request information, the portable terminal user ID being transmitted from a portable terminal including at least information of a distribution desired time of information of the distribution table at an associated time based on the information of the distribution desired time and a distribution content identifying section for retrieving, according to the portable terminal user ID, a distribution table related to the portable terminal user in the distribution table database and for identifying associated digital content set to the distribution desired time in the distribution table. The distribution processing section extracts the associated digital content thus identified from the digital content database and transmits the associated digital content to the portable terminal.

The digital content distribution system favorable includes a desired time receiving section for receiving, from a portable terminal including at least information of a distribution desired time of information of the distribution table, the information of a distribution desired time being received as the request information, and an actual distribution time calculating section for calculating an actual distribution time on the basis of the number or a reception sequence of request information items received for a time zone including the distribution desired time, the actual distribution time being apart by at least a predetermined period of time from distribution execution based on another request information item in the time zone. The distribution processing section extracts associated digital content based on the request information from the digital content database and transmits the associated digital content to the portable terminal at the actual distribution time.

The digital content distribution system favorably includes a position corresponding content distribution section for acquiring, from a portable terminal, current position information of the portable terminal; identifying digital content linked with position information in the digital content database, on the basis of the current position information; and transmitting the digital content to the portable terminal.

It is favorable in the digital content distribution system that the position corresponding content distribution section extracts from a user database a registered address or a temporary position of a portable terminal user beforehand received from a portable terminal, identifies digital content in the digital content database on the basis of the registered address or the temporary position, and distributes the digital content to the portable terminal.

It is favorable in the digital content distribution system that the position corresponding content distribution section distributes map data as digital content and the position corresponding content distribution section extracts advertisement information items of various facilities existing in an area indicated by the map data from an advertisement database having stored advertisement information items of the respective facilities, and distributes the map data with the advertisement information items displayed on the map data, to the portable terminal.

It is favorable in the digital content distribution system that the position corresponding content distribution section distributes an icon related to an acquisition request command of the advertisement information to the portable terminal, the icon being displayed at a position of an associated facility in the map data.

It is favorable in the digital content distribution system that the position corresponding content distribution section distributes, to the portable terminal to the portable terminal, one representative icon related to an acquisition request command of each of facilities collectively existing at positions in a predetermined range, the icon being displayed at the position in the map data.

It is favorable in the digital content distribution system that the position corresponding content distribution section distributes the advertisement information to the portable terminal, the advertisement information including at least either one of vacant seat information and item/service bargain sale information of the facility beforehand received from a terminal of the facility.

The digital content distribution system favorably includes a selected advertisement distribution section for presenting an advertisement information list which is stored in the advertisement database and for which registration inspection is completed to the terminal of the facility, receiving from the terminal of the facility a selection event of distribution desired advertisement information to be selected from the advertisement information, extracting the distribution desired advertisement information from the advertisement database, and distributing the distribution desired advertisement information to the portable terminal.

It is favorable in the digital content distribution system that the position corresponding content distribution section distributes map data including a program to the portable terminal. The program receives from the terminal a movement instruction of a cursor in a fixed direction for a fixed period of time on a portable terminal display and continuously moves a selection display item of each of a plurality of icons disposed on the map data in the fixed direction for the fixed period of time.

It is favorable in the digital content distribution system that the digital content stored in the digital content database includes a program for scrolling the content at least at a speed such that an end of the content moves from a first end of the portable terminal display to a second end thereof within a predetermined period of time and a program for scrolling the content at most at a speed such that after the end of the content reaches the second end, another end of the content reaches the second end of the portable terminal display within at least a predetermined period of time.

The digital content distribution system favorably includes a spot advertisement distribution section for retrieving advertisement information including an attribute linked with an attribute of the distribution desired digital content in an advertisement database having stored advertisement information of each facility, and distributing the advertisement information as a spot advertisement in the distribution desired digital content.

According to the present invention, there is provided a digital content distribution method of distributing digital content to a portable terminal by a computer. The digital content distribution method including the steps of storing a distribution table in a distribution table database for each portable terminal user, the distribution table including distribution desired digital content which is identified by designation regarding distribution desired digital content and which is listed in time series; and distributing, when request information requesting distribution is received from the portable terminal, the distribution desired digital content listed in the distribution table to the portable terminal.

According to the present invention, there is provided a digital content distribution program for making a computer execute a digital content distribution method of distributing digital content to a portable terminal by a computer. The digital content distribution program including a step of storing a distribution table in a distribution table database for each portable terminal user, the distribution table including distribution desired digital content which is identified by designation regarding distribution desired digital content and which is listed in time series and a step of distributing, when request information requesting distribution is received from the portable terminal, the distribution desired digital content listed in the distribution table to the portable terminal.

According to the present invention, there is provided a portable terminal for receiving digital content from a digital content distribution system, comprising a distribution desired transmitting section for transmitting designation regarding distribution desired digital content and a distribution desired time to the digital content distribution system and a reception processing section for receiving the digital content desired to be distributed at the distribution desired time according to a distribution table, the distribution table being created by the digital content distribution system and including the distribution desired digital content listed in time series to be distributed within a predetermined period of time.

The portable terminal favorably includes a position information acquiring section for acquiring current position information from a current position information acquiring device and transmitting the current position information to the digital content distribution system.

The portable terminal favorable includes a selective movement processing section for receiving, if the digital content distributed from the digital content distribution system is map data in which icons related to an acquisition request command of advertisement information of various facilities are displayed at positions of the facilities, a movement instruction of a cursor in a fixed direction for a fixed period of time on a portable terminal display and continuously moving a selection display item of each of a plurality of icons disposed on the map data in the fixed direction for the fixed period of time.

The portable terminal favorably includes a scroll speed control section for scrolling the content distributed from the digital content distribution system, at least at a speed such that an end of the content moves from a first end of a portable terminal display to a second end thereof within a predetermined period of time and scrolling the content at most at a speed such that after the end of the content reaches the second end, another end of the content reaches the second end of the portable terminal display within at least a predetermined period of time.

The other objects and methods of achieving the objects will be readily understood in conjunction with the description of embodiments of the present invention and the drawings.

The digital content includes generally called advertisements, administrative information, and programs distributed in response to a request from a user. However, the digital content in this specification is, unless otherwise noted, information directly or indirectly requested by the user and includes so-called programs. Additionally, the advertisement (information) includes information distributed in response to a request from the user, namely, advertisement information, disaster information, and administrative information indicating notices from administrative organizations.

In addition, a distribution table is a time-series list of distribution desired digital content desired for distribution and includes a program list.

The present invention also includes embodiments as follows.

### (1) Congestion control

There is provided an information distribution apparatus for distributing, according to a predetermined schedule, information to a plurality of user terminals respectively used by a plurality of users. The information distribution apparatus includes a section to detect distribution time to distribute information to each of the plural user terminals, a section to detect whether or not information of a volume equal to or more than a predetermined volume is to be distributed at the distribution time, a section to make a distribution schedule according to which the distribution information at the distribution time is dispersed to predetermined time zones if the information to be distributed exceeds the predetermined volume, and a section to distribute the information according to the distribution schedule.

### (2) Congestion control

There is provided an information distribution apparatus for distributing, according to a predetermined schedule, information to a plurality of user terminals respectively used by a plurality of users. The information distribution apparatus includes a section to receive information distribution desired time from each of the plural user terminals, a section to calculate a distribution time for each of the plural user terminals on the basis of the distribution desired time, a unit to transmit to each of the user terminals an associated one distribution time calculated by the distribution time calculating section, a section to receive a distribution request for the user terminal to transmit the information at the associated distribution time, and a section to distribute information to the user terminal according to the distribution request. The distribution time calculation section calculates a distribution time dispersed to a time zone according to the distribution desired time thus received.

### (3) Representative icon

There is provided a map information distribution apparatus to distribute map information to a user terminal. The map information distribution apparatus includes a section to store advertisement information beforehand related to position information, a section to identify map information to be distributed to the user terminal, a section to extract advertisement information corresponding to position information contained in the map information, a section to determine whether an icon indicating the extracted advertisement information thus extracted is present or absent, a section to detect, if such an icon is present, whether or not the number of such icons existing in a display area of the map information is equal to or more than a predetermined value, a section to create, if the number of icons is equal to or more than the predetermined value, a representative icon representing the icons to be displayed in the display area, and a section to superimpose the representative icon onto the map information to present the map information on the user terminal.

### (4) Scroll control

There is provided an information display to display information on a display screen while moving the information. The information display includes a section to display information at a predetermined moving speed from a first display end of the display screen to a second display end thereof opposing the first display end, a section to detect arrival of an end of the information thus displayed at the second display end, and a section to display, if the arrival is detected, the information at a moving speed less than the predetermined moving speed.

### (5) Spot advertisement insertion

There is provided an information distribution apparatus to distribute, to a plurality of user terminals respectively used by a plurality of users, a plurality of information items requested by the users at each predetermined distribution timing. The information distribution apparatus includes a section to store user information regarding the users, a section to identify a plurality of distribution information items to be distributed to the user terminals according to the requests from the users, a section to identify, according to the user information thus stored, advertisement information to be inserted between the plural distribution information items thus identified, and a section to distribute the distribution information and the advertisement information to the user terminals.

The section to identify the advertisement information in the information distribution apparatus identifies a predetermined number of advertisement information items at each of the distribution timing.

The section to identify the advertisement information in the information distribution apparatus identifies advertisement information to be inserted between the plural distribution information items to be distributed at the distribution timing.

### (6) Restricted content creation

There is provided an information distribution apparatus to distribute, to a plurality of user terminals respectively used by a plurality of users, distribution information requested by the users, the information distribution apparatus being connected via a network to a distribution request device requesting distribution of the distribution information to the user terminals. The information distribution apparatus includes a section to store distribution candidate information sent from the distribution request device to indicate candidates of distribution to the user terminals, a section to receive from the distribution request device a change request of the distribution information to be distributed to the users, a section to present on the distribution request device a list of distribution candidate information satisfying a predetermined criterion, a section to receive identification of distribution candidate information in the list requested to be distributed, and a section to distribute the identified distribution candidate information to the user terminals.

### (7) Changeability of content on the basis of time elements such as time and day of the week

There is provided an information distribution apparatus to distribute, to a plurality of user terminals respectively used by a plurality of users, a plurality of information items requested by the users at each predetermined distribution timing. The information distribution apparatus includes a distribution table storage section to store for each of the user terminals a distribution table including a time-series list of distribution desired information identified by designation regarding distribution desired information in a distribution table database, and a distribution processing section to distribute, at reception of request information requesting distribution from one of the user terminals, the distribution desired information listed in the distribution table to the portable terminal. The distribution table storage section stores the distribution desired information, i.e., the distribution desired information at each of the distribution timing.

### (8) Content determination using map information

There is provided an information distribution apparatus to distribute, to a user terminal, distribution information corresponding to a user of the user terminal and map information based on a position of the user terminal. The information distribution apparatus includes a section to distribute, to the user terminal, map information which is based on the position of the user terminal and which includes advertisement information related to the map information, a section to detect an access state regarding access to the advertisement information, and a section to determine according to the access state, in an operation to distribute the distribution information, distribution information to be delivered.

According to the present invention, data processing efficiency and usability are improved in the setting of the distribution contents and the distribution time of digital content. Additionally, according to, for example, the position of the portable terminal, the distribution processing can be efficiently executed, and excellent operability can be realized for the digital content and advertisements.

Other objects, features and advantages of the invention will become apparent from the following description of the embodiments of the invention taken in conjunction with the accompanying drawings.

### BRIEF DESCRIPTION OF THE DRAWINGS

FIG. 1 is a network configuration diagram showing an embodiment of a digital content distribution system.
FIG. 2A is a diagram showing a data layout example of a program list (distribution table) database in an embodiment.
FIG. 2B is a diagram showing a data layout example of a digital content database in an embodiment.
FIG. 2C is a diagram showing a data layout example of a user database in the embodiment.
FIG. 2D is a diagram showing a data layout example of a advertisement database in an embodiment.
FIG. 3 is a flowchart showing procedure example 1 of a digital content distribution method in an embodiment.
FIG. 4 is a flowchart showing procedure example 2 of a digital content distribution method in an embodiment.
FIG. 5 is a flowchart showing procedure example 3 of a digital content distribution method in an embodiment.
FIG. 6 is a flowchart showing procedure example 4 of a digital content distribution method in an embodiment.
FIG. 7 is a flowchart showing procedure example 5 of a digital content distribution method in an embodiment.
FIG. 8 is a diagram showing a configuration image of a program list (distribution table) of an embodiment.
FIG. 9 is a diagram showing an image of scroll control for digital content.
FIG. 10 is a flowchart showing procedure example 6 of a digital content distribution method in an embodiment.
FIG. 11 is a diagram showing screen transition 1 in an embodiment.
FIG. 12 is a diagram showing screen transition 2 in an embodiment.
FIG. 13 is a diagram showing screen transition 3 in an embodiment.
FIG. 14 is a diagram showing screen transition 4 in an embodiment.
FIG. 15 is a diagram showing screen transition 5 in an embodiment.
FIG. 16 is a flowchart showing procedure example 7 of a digital content distribution method in an embodiment.

### DESCRIPTION OF THE EMBODIMENTS

### System configuration

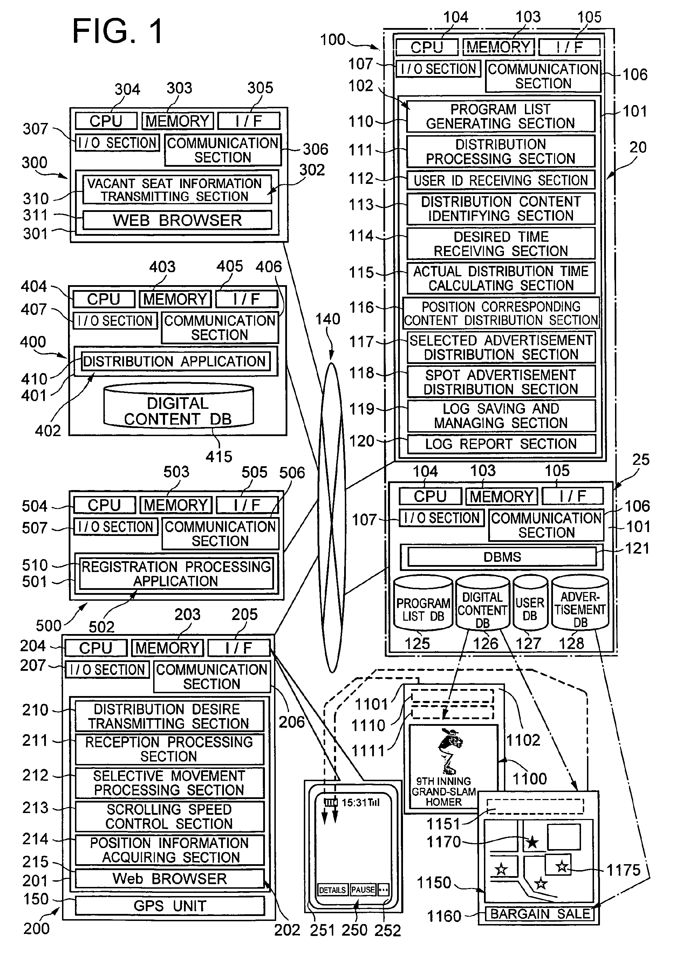

Referring now to the drawings, description will be given of embodiments of the present invention. FIG. 1 is a network configuration diagram showing an embodiment of a digital content distribution system 100. Assume that the digital content distribution system 100 includes, for example, an application server 20 including a functional sections 110 to 120 to implement the present invention and to primarily execute programs, and a database server 25 including various databases 125 to 128 and a DataBase Management System (DBMS) 121. In this connection, the application server 20 and the database server 25 may be configured in one module.

In the description below, constituent components having almost the same functions in the application server 20 and the database server 25 such as a Central Processing Unit (CPU) 104, a memory 103, an input/output interface 105, a communication section 106, and an Input/Output (I/O) section 107 are assigned with the same reference numerals.

It is assumed in the following description that the application server 20 and the database server 25 operate in cooperation with each other to conduct processing as the digital content distribution system 100 according to the present invention.

To implement functions to achieve the digital content distribution method of the present invention, the digital content distribution system 100 of the present invention (to be referred to as a system 100 hereinbelow) reads a program 102 stored in a program database 101 such as a rewritable memory to load the program 102 in the memory 103 and then executes the program 102 by the CPU 104 as an operating unit.

The system 100 also includes an input/output interface 105 generally arranged in a computer system such as various keyboards and buttons and a display and a communication section 106 to communicate data with, for example, a portable terminal 200.

The system 100 connects by the communication section 106 to the portable terminal 200 and the like via, for example, a network 140 such as internet, a Local Area Network (LAN), and/or a serial interface communication line to thereby communicate data. Between the various functional sections and the communication section 106 of the system 100, the I/O section 107 executes buffering of data and various intermediation processing.

Next, description will be given of functional sections which the system 100 configures and maintains according to, for example, the program 102. Assume in this regard that the system 100 may use a program list database 125 as a distribution table database, a digital content database 126, a user database 127, and an advertisement database 128. Additionally, a program list is exemplified as the distribution table in the embodiment. However, the application example of the distribution table is not limited only to a program list. It is possible to adopt any list configured by arranging distribution desired digital content in time series.

The system 100 includes a distribution table storage section 110 which stores, for each portable terminal user, a program list (distribution table) 1000 in which distribution desired digital content identified by designation regarding distribution desired digital content is listed in time series, in the program list (distribution table) database 125.

Also, the system 100 includes a distribution processing section 111 which distributes, at reception of request information requesting distribution from the portable terminal 200, the distribution desired digital content listed in the program list (distribution table) 1000 to the portable terminal 200.

The system 100 includes a user IDentifier (ID) receiving section 112 which receives, as the request information, a portable terminal user ID transmitted at a pertinent time according to the distribution desired time information from a portable terminal 200 including at least information of distribution desired time of the information of the program list 1000. In this situation, it can be assumed that at pint of time when the system 100 creates the program list (distribution table) 1000, the system 100 transmits at least information of distribution desired time of the information of the program list (distribution table) 1000 to the portable terminal 200. The portable terminal user ID is an item to request distribution of a program and may be any item to which digital content or the like of a predetermined program list (distribution table) can be distributed according to the information thereof, and may be any item capable of identifying a user. In this case, the system 100 may also assign the ID to a portable terminal user. It is also possible that the portable terminal user ID is an item to identify the portable terminal 200 and includes a unique ID and a telephone number of the portable telephone. When the terminal side manages the time and the server side manages the time and the program list (distribution table), there can be attained advantages as below. That is, the volume of data communicated between the terminal and the server is decreased, the load imposed onto the terminal is mitigated, and the maintenance is facilitated on the server side.

Additionally, the system 100 favorable includes a distribution content identifying section 113 which retrieves, according to the portable terminal user ID, a program list (distribution table) 1000 corresponding to the portable terminal user in the program list (distribution table) database 125 to identify associated digital content 1100 set to the delivery desired time in the program list (distribution table) 1000. In this situation, the distribution processing section 111 extracts the identified digital content 1100 from the digital content database 126 to transmit the digital content 1100 to the portable terminal 200.

The system 100 favorably includes a desired time receiving section 114 which receives as the request information the distribution desired time information from the portable terminal 200 including at least information of the distribution desired time of the information of the program list (distribution table) 1000.

Also, the system 100 favorably includes an actual time calculating section 115 which calculates an actual distribution time according to the number or the reception sequential number of request information received for a time zone substantially equal to that of the distribution desired time. Specifically, the actual time calculating section 115 calculates a point of time which is apart, by at least a predetermined period of time, from a point of time to execute distribution according to other request information in the time zone. In this situation, the distribution processing section 111 extracts the digital content 1100 according to the request information to transmit the digital content 1100 to the portable terminal 200 at the actual distribution time.

The system 100 favorably includes a position corresponding content distribution section 116. The section 116 acquires current position information of a portable terminal 200 therefrom, identifies, according to the current position information, digital content 1100 linked with position information in the digital content database 126, and then distributes the digital content 1100 to the portable terminal 200.

It is favorable in the system 100 that the position corresponding content distribution section 116 extracts from the user database 127 a registered address of a temporary position of a portable terminal user beforehand received from the portable terminal 200 and identifies digital content 1100 in the digital content database 126 to distribute the digital content 1100 to the portable terminal 200.

Also, it is favorable in the system 100 that the position corresponding distribution section 116 is a section to distribute map data 1150 as the digital content 1100 and extracts advertisement information 1160 of various facilities existing in a zone indicated by the map data 1150 from the advertisement database 128 having stored advertisement information for each facility and distributes the map data 1150 with the advertisement information 1160 displayed thereon to the portable terminal 200.

It is also favorable in the system 100 that the position corresponding distribution section 116 distributes the map data to the portable terminal 200 such that an icon 1170 linked with an acquisition request command of the advertisement information 1160 is displayed on the position of the facility in the map data 1150.

Furthermore, it is favorable in the system 100 that the position corresponding distribution section 116 distributes the map data to the portable terminal 200 such that one representative icon 1170, which is linked with an acquisition request command of the advertisement information 1160 of each facility in a group of facilities collectively existing in a predetermined range of positions, is displayed on the position of the facility in the map data 1150.

Also, it is favorable in the system 100 that the position corresponding distribution section 116 distributes the map data to the portable terminal 200 in which the advertisement information includes at least either one of vacant seat information and item/service bargain sale information in the facility beforehand received from a terminal 300 of the facility.

The system 100 favorably includes a selected advertisement distribution section 117. The section 117 presents on the terminal 300 of the facility a registration-inspected advertisement information list 1161 beforehand inspected for registration and stored in the advertisement database 128 and then receives from the terminal 300 of the facility a selection event of advertisement information desired for distribution in the advertisement information list, extracts the advertisement information 1160 from the advertisement database 128 and then distributes the advertisement database 128 to the portable terminal 200.

It is also favorable in the system 100 that the position corresponding distribution section 116 distributes the map data 115 including a program 1151 to the portable terminal 200. The program 1151 receives from the portable terminal 200 a moving instruction of a cursor in a fixed direction for a fixed period of time on a portable terminal display 250 to continuously move a selection display item of each of a plurality of icons (1170, 1175 and so on) arranged on the map data 1150, in the fixed direction for the fixed period of time. Although description will be given later, the processing function of continuous movement of the icon 1170 in a fixed direction for a fixed period of time is not limited to the example implemented by disposing the program 1151 in the map data 1150. That is, it is also possible that while the map data 1150 does not include the program 1151, the portable terminal 200 to display the map data 1150 includes the program 1151 or a function similar to that of the program 1151.

In the system 100, the digital content 1100 stored in the digital content database 126 favorably includes a program 1110 to scroll the content thereof at least at a speed such that an end 1101 of the content moves from a first end 251 of the portable terminal display 250 to a second end 252 thereof within a predetermined period of time and a program 1111 to scroll the content thereof at most at a speed such that after the end 1101 of the content reaches the second end 252, another end 1102 of the content reaches the second end 252 of the portable terminal display 250 within at least a predetermined period of time. Although description will be given later, the scroll processing function of the digital content 1100 is not limited to the example implemented by disposing the programs 1110 and 1111 therein. That is, it is also possible that while the digital content 1100 does not include the programs 1110 and 1111, the portable terminal 200 to display the digital content 1100 includes the programs 1110 and 1111 or a function similar to those of the programs 1110 and 1111.

The system 100 favorably includes a spot advertisement distribution section 118. The section 118 retrieves, from the advertisement database 128 having stored the advertisement information 1160 for each facility, advertisement information 1160 having an attribute linked with an attribute of the distribution desired digital content, and then distributes the retrieved advertisement information 1160 as a spot advertisement in the distribution desired digital content.

Also, the system 100 favorably includes a log saving and managing section 119 to store history of browsing of the digital content 1100 and advertisement information 1160 of each portable terminal 200 in, for example, the user database 127. The browsing history stored as above may be used, for example, when the system makes a proposal of use of the digital content 1100 to the portable terminal user side or selects the advertisement information to be inserted in the digital content 1100 on the basis of tendency of browsing of the digital content 1100 and the advertisement information 1160 in the past and attributes of the portable terminal users.

The system 100 favorably includes a log report section 120 which creates a log report by preparing information of the browsing history in an appropriate form to transmit the log report to pertinent portable terminal 200 and terminals 300 in various facilities (e.g., stores) as sponsors of advertisements.

On the other hand, the portable terminal 200 of the present invention reads a program 202 stored in the program database 201 such as a rewritable memory to load the program 202 in the memory 203 and executes the program 202 by the CPU 204. The portable terminal 200 includes an input/output interface 205 generally arranged in a computer system such as various keyboards and buttons and a display 250, and a communication section 206 to communicate data with the digital content distribution system 100.

The portable terminal 200 connects by the communication section 206 to the digital content distribution system 100 via, for example, a network such as internet, an LAN, and/or a serial interface communication line to thereby communicate data. Between the various functional sections and the communication section 206 of the portable terminal 200, the I/O section 207 executes buffering of data and various intermediation processing.

Next, description will be given of functional sections which the portable terminal 200 configures and maintains according to, for example, the program 202. The portable terminal 200 includes a distribution desired transmitting section 210 to transmit designation regarding distribution desired digital content and distribution desired time to the system 100.

Also, the portable terminal 200 favorably includes a position information acquiring section 214 which acquires current position information from a current position information acquiring section such as a Global Positioning System (GPS) 150 and transmits the current position information to the system 100.

The portable terminal 200 favorably includes a reception processing section 211. The section receives digital content 1100 which is transmitted from the system according to a program list (distribution table) 1000 created by listing in time series the distribution desired digital content to be distributed within a predetermined period of time and which is desired to be distributed at the distribution desired time and then displays the digital content 1100 using an output interface.

Additionally, the portable terminal 200 favorably includes a selective movement processing section 212. The section 212 receives from an input interface a moving instruction of a cursor in a fixed direction for a fixed period of time on the portable terminal display 250 if the digital content 1100 distributed from the system is the map data 1150 in which the icon 1170 linked with an acquisition request command of the advertisement information 1160 of each facility is displayed on a location of the facility. The selective movement processing section 212 moves a selective display item of each of the plural icons arranged on the map data 150 in the fixed direction for the fixed period of time. As described above, the processing function of continuous movement of the icon 1170 in a fixed direction for a fixed period of time is not limited to the example implemented by the selective movement processing section 212 of the portable terminal 200. There can also be assumed an example in which the processing function is implemented by disposing the program 1151 in the map data 1150.

The portable terminal 200 favorably includes a scroll speed control section 213. The section 213 scrolls the digital content 1100 distributed from the system 100 at least at a speed such that an end 1101 of the content moves from a first end 251 of the portable terminal display 250 to a second end 252 thereof within a predetermined period of time and scrolls the content thereof at most at a speed such that after the end 1101 of the content reaches the second end 252, another end 1102 of the content reaches the second end 252 of the portable terminal display 250 within at least a predetermined period of time. As described above, the scroll processing function of the digital content 1100 is not limited to the example implemented by the scroll speed control section 213. That is, there can be assumed an example in which the scroll processing function is implemented by disposing the programs 1110 and 1111 in the digital content 1100.

On assumption that the system 100 is a Web server and communicates data using "hyper-text transfer protocol (http) request and response", the portable terminal 200 of the embodiment includes a Web browser 215 to access the system 100. By use of the Web browser 215, it is possible to output data such as the digital content 1100 to the portable terminal display 250.

On the other hand, the terminal 300 of the facility such as a store (to be referred to as a store terminal 300 hereinbelow) requesting the advertisement information 1160 reads a program 302 stored in a program database 301 such as a rewritable memory and loads the program 302 in a memory 303 to execute the program 302 by a CPU 304 as an operating unit. The store terminal 300 also includes an input/output interface 305 generally arranged in a computer system such as various keyboards and buttons and a display and a communication section 306 to communicate data with, for example, the system 100.

The store terminal 300 connects by the communication section 306 to the system 100 and the like via, for example, a network such as internet, an LAN, and/or a serial interface communication line to thereby communicate data. Between the various functional sections and the communication section 306 of the store terminal 300, the I/O section 307 executes buffering of data and various intermediation processing.

Next, description will be given of functional sections which the store terminal 300 configures and maintains according to, for example, a program 302. The store terminal 300 includes a vacant seat information transmitting section 310 which receives, via an input interface, an input of information regarding a vacant seat state in a pertinent store to transmit the information to the system 100. As a result, it is possible to add the current vacant seat state, for example, to the advertisement information 1160 of the store to be provided to the portable terminal 200.

On assumption that the system 100 is a Web server and communicates data using "hyper-text transfer protocol (http) request and response", the store terminal 300 includes a Web browser 311 to access the system 100. By use of the Web browser 311, it is possible to select the advertisement information 1160 for the spot advertisement and it is possible to output various data items in association with, for example, a registration inspection request of the advertisement information 1160.

On the other hand, various digital content to be stored in the digital content database 126 of the system 100 is obtained from providers of various kinds of content such as a broadcasting corporation, a motion picture company, and a publisher. Therefore, it is assumed that the system 100 is coupled via a network 140 with a content holder server 400 installed by the provider.

The content holder server 400 reads a program 402 stored in a program database 401 such as a rewritable memory and loads the program 402 in a memory 403 to execute the program 402 by a CPU 404 as an operating unit. The content holder server 400 also includes an input/output interface 405 generally arranged in a computer system such as various keyboards and buttons and a display and a communication section 406 to communicate data with the system 100. The content holder server further includes a digital content database 415 for storing the various digital content.

The content holder server 400 connects by the communication section 406 to the system 100 and the like via, for example, a network such as internet, an LAN, and/or a serial interface communication line to thereby communicate data. Between the various functional sections and the communication section 406 of the content holder server 400, the I/O section 407 executes buffering of data and various intermediation processing. The content holder server 400 configures and maintains, as the program 402, the distribution application 410 to execute content distribution processing to distribute content to the system 100.

The system 100 can also cooperate with a registration server 500 disposed to execute processing for request information of digital content distribution from the portable terminal 200 and preceding processing of member registration. The registration server 500 reads a program 502 stored in a program database 501 such as a rewritable memory to load the program 502 in a memory 503 and executes the program 502 by a CPU 504 as an operating unit. The registration server 500 includes an input/output interface 505 generally disposed in a computer system such as various keyboards and buttons and a display and a communication section 506 to communicate data with the system 100.

The registration server 500 connects by the communication section 506 to the system 100 and the like via a network 140 such as internet, LAN, and a serial interface communication line to communicate data. Between various functional sections and the communication section 506 of the registration server 500, an input/output section 507 executes data buffering and various intermediation processing. The registration server 500 configures and maintains as the program 502 a registration processing application 510 which receives and processes various registration requests from the portable terminal 200.

Various functional sections 110 to 120 of the system 100 or various functional sections 210 to 214 of the portable terminal200 described above may be implemented using hardware or in the form of a program stored in an appropriate storage such as a memory or a Hard Disk Drive (HDD). In this situation, the CPU(s) 104, 204 reads a required program from the storage to load the program in the memory(ies) 103, 203 and then executes the program.

The program 202 to be used by the portable terminal 200 is not necessarily stored in the portable terminal 200. It is also possible that the portable terminal 200 accesses via the network 140 or the like an appropriate server (which may be a computer system providing a required program) to download the program from the server.

As for the network 140, there may be adopted, in addition to internet and LAN, various networks such as an Asynchronous Transfer Mode (ATM) line, a leased line, a Wide Area Network (WAN), a lamp circuit network, a wireless network, a public communication line, a portable telephone line, and a serial interface communication line. When a virtual leased network technique such as a Virtual Private Network (VPN) is used, the communication through the internet can be favorably conducted with higher security. The serial interface is an interface to connect to an external device through serial transmission in which data is sequentially transmitted in a bit-by-bit manner using a single signal line. For the serial interface, there can be assumed communication modes including RS-232C, RS-422, IrDa, USB, IEEE1394, and Fibre Channel.

### --- Database layout ---

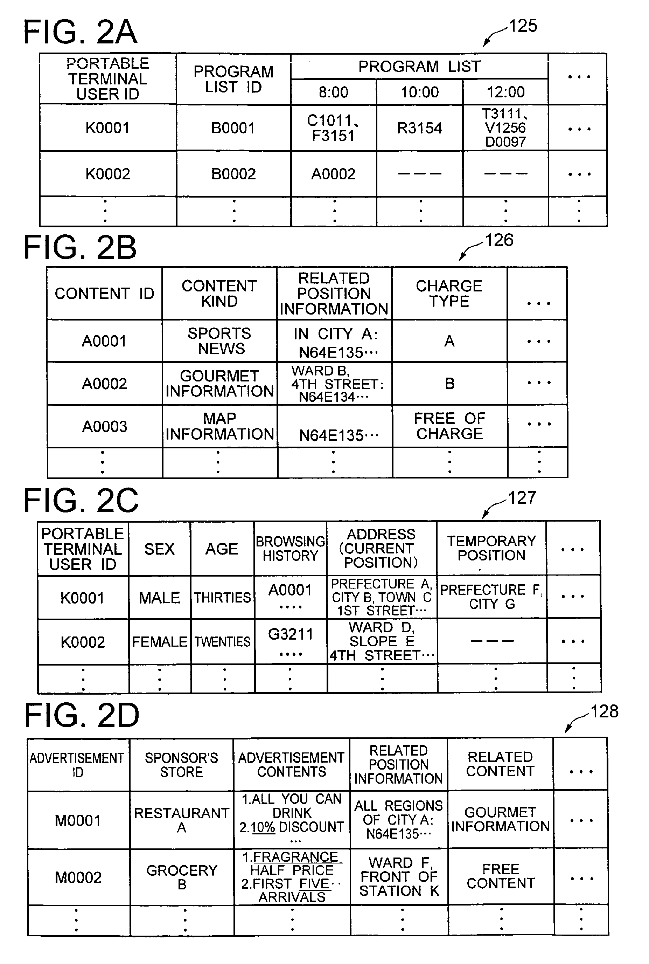

Description will now be given of a layout of databases used in the embodiment of the system 100. FIGS. 2A to 2D show examples of data layouts respectively of a program list (distribution table) database 125, a digital content database 126, a user database 127, and an advertisement database 128.

The program list (distribution table) database 125 is constructed as below. According to designation of distribution desired digital content and distribution desired time received from the portable terminal 200, the system 100 creates for each portable terminal user a program list (distribution table) in which the distribution desired digital content to be distributed within a predetermined period of time such as one day or one week is listed in time series and then stores the program list (distribution table) in the program list (distribution table) database 125. The database 125 is a set of records in which using, for example, a portable terminal user ID as a key, a program list (distribution table) ID and the contents (a distribution time zone and an ID of digital content to be distributed) of the program list (distribution table) are related to each other.

The digital content database 126 is a database to store digital content 1100 to be distributed to the portable terminal 200 and is a set of records in which using, for example, a content ID as a key, information items, for example, a content kind, related position information, and a charge type are related to each other.

The user database 127 is a database to store information of the portable terminal users and is a set of records in which using, for example, a portable terminal user ID as a key, information items such as "sex", "age", "browsing history of digital content or the like", "address (current position)", and "temporary position during a travel or a business trip" are related to each other.

The advertisement database 128 is a database to store information such as advertisement information to be used as a spot advertisement in the digital content 1100 and advertisement information to be inserted in map data as the digital content 1100. The advertisement database 128 is a set of records in which using, for example, an advertisement ID as a key, information items such as a store (facility) of a sponsor, the contents of an advertisement (e.g., a word or phrase underscored in FIGS. 2A to 2D may be selectively changed to another word or phrase by an instruction from the store terminal 300), related position information, and an attribute of the related digital content 1100 are related to each other.

In this regard, the digital content database 126 shown in FIG. 2B may be partitioned according to kinds of content.

### --- Processing flow example 1 ---

Referring now to the drawings, description will be given of a procedure to conduct the digital content distribution method in the embodiment. Operations corresponding to the digital content distribution method described below are implemented by the program 102 which the system 100 loads in the memory 103 for execution thereof. The program 102 includes codes to conduct various operations, which will be described below. Processing of the portable terminal 200 associated with the processing of the digital content distribution method is implemented by the program 202 which the portable terminal 200 loads in the memory 203 for execution thereof. The program 102 includes codes to conduct various operations, which will be described below. In the operation, it is assumed as an example that the system 100 includes a Web server function and communicates data with the portable terminal 200 and the store terminal 300 through http request and response processing. Therefore, for example, the portable terminal 200 accesses the system 100 by use of the Web browser 215.

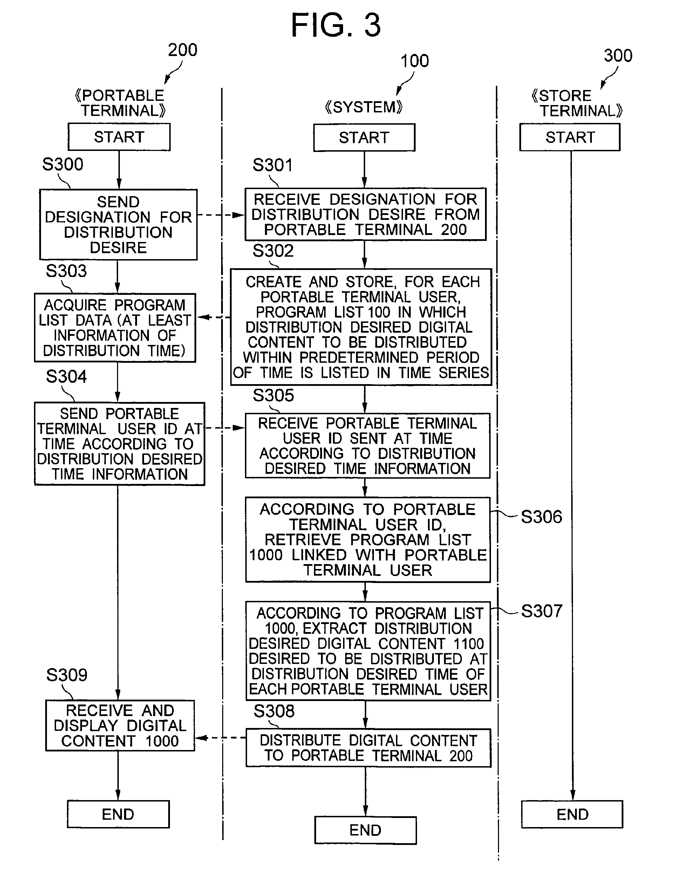

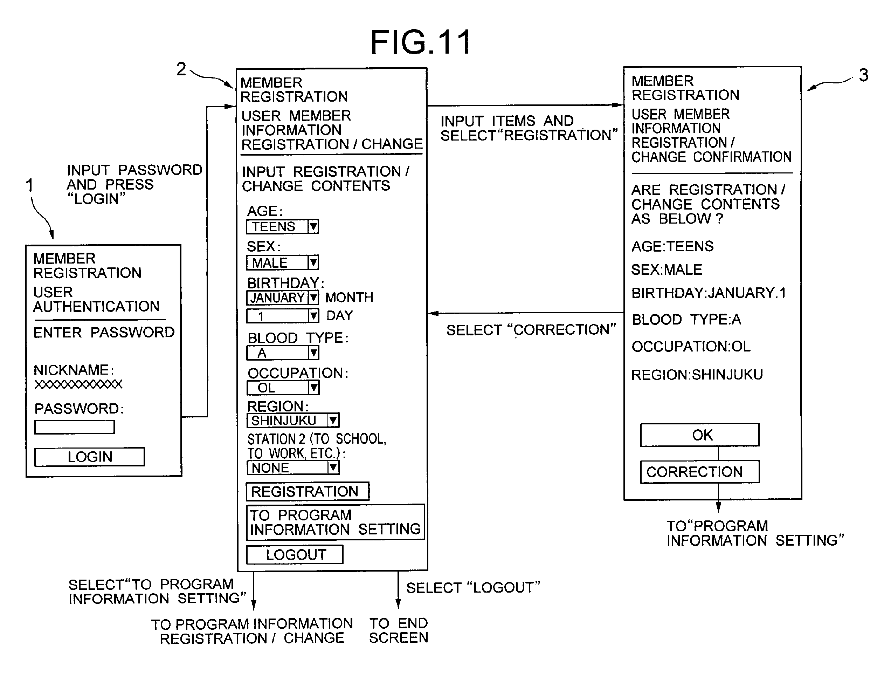

FIG. 3 shows a flow of procedure example 1 to conduct the digital content distribution method of the embodiment. Description will be first given of a main flow of the digital content distribution method of the embodiment. Assume that the terminal user becomes beforehand a member of the services provided by the digital content distribution system, through processing of member registration for the user as indicated by screens 1 to 3 of FIG. 11. Due to the member registration processing for the user, the system 100 can acquire user attribute information items shown in the screens 1 to 3 (such as "sex", "age", "birthday", "occupation", and "position"). The user attribute information items are stored in the user database 127 and are used as the base of attribute matching processing with, for example, the digital content 1100 when the digital content 1100 and the advertisement information 1160 to be distributed to the portable terminal are selected or are recommended to be sent to the portable terminal side.

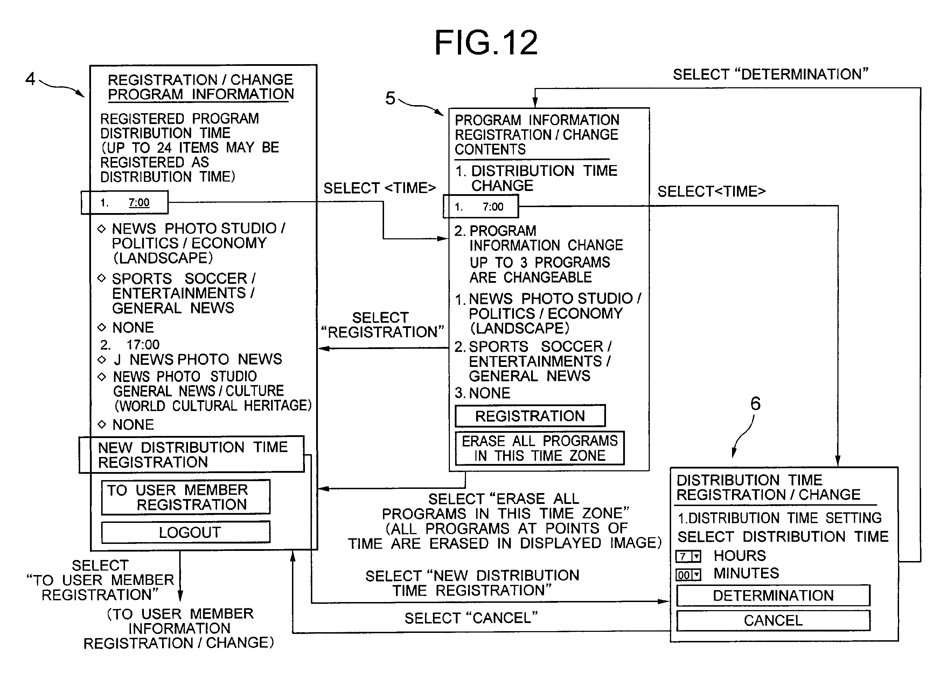

It is required that the portable terminal 200 in which the member registration is beforehand completed for the user creates a program list (distribution table) for the system 100 before distribution of the digital content 1100. The portable terminal 200 conducts designation regarding distribution desired digital content and distribution desired time, for example, in a creation site of the program list (distribution table) provided by the system 100. As the site, it is also possible to assume, for example, screens 4 to 6 shown in FIG. 12. In these screens 4 to 6, there are presented, for example, a program list, that is, various news items and photos in genres of the digital content such as "politic", "economy", "sports", "entertainments", "general news" (screen 4). The distribution time can be set to each information item on, for example, a pull-down menu (screen 6).

The portable terminal 200 receives the desired digital content 1100 and the distribution time thereof set by the portable terminal user in the site including the screens 4 to 6 and then transmits information designated for the distribution desire to the system (S300). The system 100 receives the information (S301), creates for each terminal user a program list (distribution table) 1000 in which the distribution desired digital content to be distributed within a predetermined period of time such as one day or one week is listed in time series, and stores the program list (distribution table) in the program list (distribution table) database 125 (S302). In this situation, of the data in the program list (distribution table) 1000, at least information regarding the distribution time is transmitted to the portable terminal 200. On the other hand, the portable terminal 200 receives the information regarding the distribution time to store the information in the memory 203 (S303).

The information regarding the distribution time is a point of time calculated according to the distribution desired time received from the system 100, the point of time indicating a time at which the data distribution is actually conducted. For example, if a large number of users (e.g., exceeding a predetermined number of users) desire data distribution at 12:00, traffic congestion occurs at this time on the network. That is, there arises a problem of difficulty of data communication (distribution) in a time zone of this time. To remove the problem, traffic concentration is dispersed in the configuration of the embodiment. Specifically, if users equal to or more than a predetermined number of users desire data distribution at a predetermined time, a point of time for actual data distribution time (actual distribution time) is calculated using random numbers such that the traffic is dispersed within a predetermined time zone (e.g., ten minutes before and after the desired time or ten minutes before the desired time including the point of desired time). The calculation processing is executed by the actual time calculating section 115.

In this situation, it is also possible that the system 100 receives, from the user, information indicating allowance of deviation of the distribution time relative to the desired time and stores the information in the user database 127. It is also possible to store the information regarding the distribution time and reception desired time in the user database 127. The actual distribution time may be determined according to a plurality of desired points of time beforehand received from the user and assigned with values of priority within a predetermined time zone (e.g., ten minutes before and after the desired time or ten minutes before the desired time including the point of desired time). The distribution time calculation is conducted in step S302.

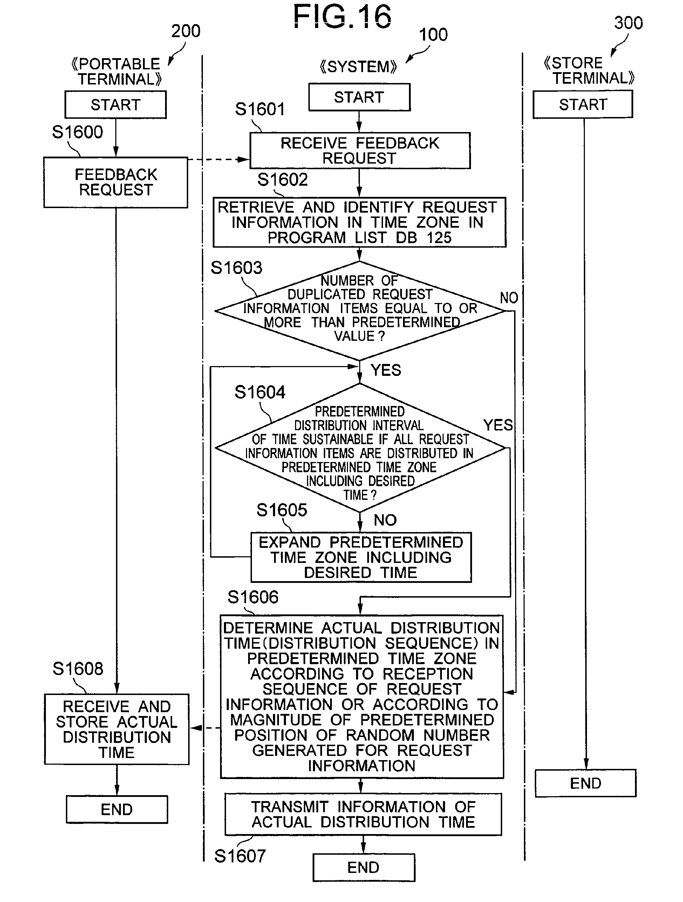

In step S302, without calculating the actual distribution time, a point of time at which step S304 which results in a request for distribution may be calculated in almost the same way as described above. When the portable terminal 200 has the distribution time thus calculated, the processing load imposed on the system 100 can be decreased. In this connection, an example of the calculation processing will be described in detail by referring to FIG. 16.

FIG. 16 shows, in a flowchart, procedure example 7 to conduct the digital content distribution method of the embodiment. The procedure example 7 assumes a situation in which the portable terminal 200 issues a request to the system 100 side for information regarding a time at which digital content is actually distributed in response to request information issued from the portable terminal 200, namely, information regarding actual distribution time. The portable terminal 200 transmits a request for information of the actual distribution time, for example, as a feedback request to the system 100 side (S1600). The system 100 receives the feedback request and acquires therefrom a portable terminal user ID (any information may be employed if the information uniquely identifies the portable terminal 200 or the portable terminal user), a password required to access the system 100, and the distribution desired time information (S1601).

Using information based on the feedback request, the system 100 accesses the program list database (distribution table database) 125 to retrieve and to identify other request information items requesting distribution according to the distribution desired time and the distribution desired time zone (S1602). The number of request information items identified above is the number of duplicated requests for distribution in the same time zone. Therefore, the system 100 makes a check to determine whether or not the number of request information items is equal to or more than a predetermined value (S1603).

If the number of request information items is equal to or more than a predetermined value in the determination step (YES in S1603), for example, if seven or more distribution requests have already been issued or if the request information from the portable terminal 200 is the seventh distribution request when the predetermined value is, for example, six distribution requests within ten minutes (i.e., distribution requests with two minutes therebetween). Naturally, it is not possible to follow the distribution interval criterion that the digital content is distributed at an interval of time of two minutes within ten minutes (NO in step S1604).

The system 100 then executes processing to expand, by a predetermined period of time, the predetermined time zone including the desired time to keep the interval of time for distribution (S1605). The system returns control to step S1604 to determine again whether or not the system 100 can follow the distribution interval criterion. The processing of steps S1605 and S1604 is repeatedly executed until it is determined that the system 100 can follow the distribution interval criterion. On the other hand, if it is determined that the system 100 can follow the distribution interval criterion (YES in step S1604), the process goes to step S1606. Also, if the number of duplicated request information items is less than the predetermined value in step S1603 (NO in step S1603), the process goes to step S1606.

At this point, the system 100 determines a distribution schedule to allocate the actual points of distribution time for the respective request information items with a predetermined interval of time therebetween, for example, according to a reception sequence of reception of the request information items from the portable terminals 200. Or, the system 100 generates a random number for each request information item. According to magnitude of, for example, of a predetermined position of the random number, there can be implemented a function similar to that of the reception sequence described above. In this way, the system 100 determines a distribution schedule to allocate the actual points of distribution time for the respective request information items with a predetermined interval of time therebetween. Or, by regarding, for example, the predetermined position of the random number, the system 100 may determine the actual distribution time for each request information item. The system 100 may adopt any procedure if the actual points of distribution time are determined to distribute digital content with a predetermined interval of time therebetween within the predetermined time zone.

The system 100 transmits the information of the actual distribution time thus determined to the portable terminal 200 (S1607) to thereby terminate the processing. The system 100 sets the actual distribution time information as distribution time in the program list database 125. On the other hand, the portable terminal 200 receives the actual distribution time information from the system 100 to store the information in the memory 203 (S1608) and then terminates the processing.

The actual distribution time thus determined is sent from the portable terminal 200 as request information to the system 100. According to the request information including the actual distribution time, the distribution processing section 1111 of the system extracts the digital content 1100 form the digital content database 126 and transmits the digital content 1100 to the portable terminal 200 at the actual distribution time.

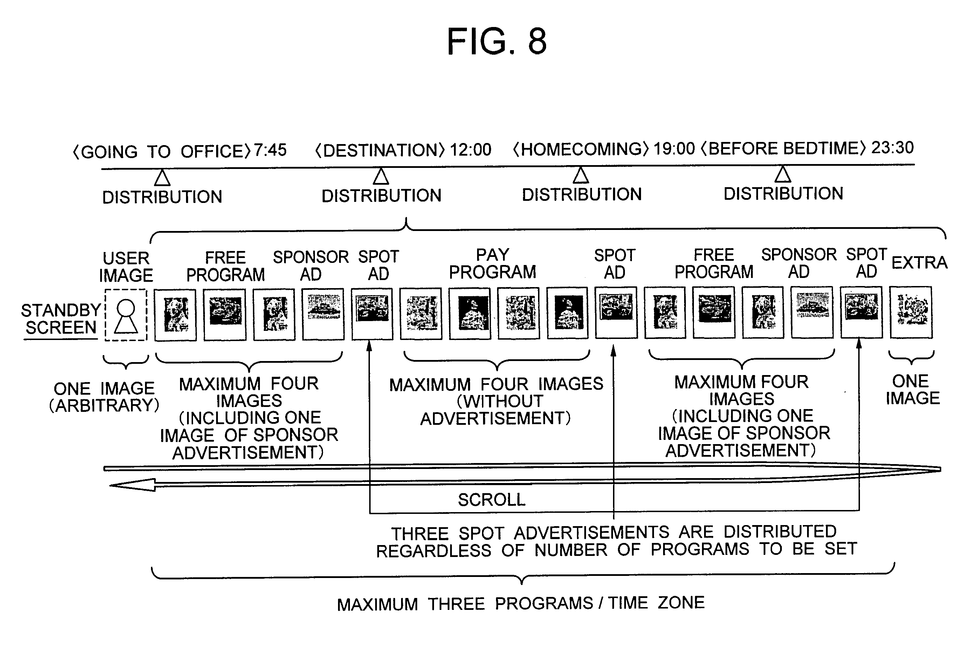

As an example of a visible image of the program list (distribution table) 1000 created as above, it may also possible to assume a television or radio program column placed in a newspaper or a magazine. In this display style, the program column includes a distribution time sub-column indicating distribution points of time and a content sub-column indicating, for example, a name of each content to be distributed at an associated distribution time. There exists an actual operation example in which the portable terminal user sets distribution content for each of the time zones such as "to office", "destination", "homecoming", and "before bedtime" as shown in FIG. 8. In the content, one program includes at most four pictures or images. In the case of the example, a spot advertisement is arranged at the end of each program. In the case of a free program provided free of charge, one of the pictures is used for a sponsor advertisement. However, the operation example is only an example, that is, the operation example can be arbitrarily changed on the system 100 side according to various conditions such as the size respectively of the digital content, the size of the advertisement information 1160, and specifications and operation states respectively of the network 140 and the system 100. It is also possible to distribute a predetermined number (e.g., three) of spot advertisements shown in FIG. 8 irrespectively of the number of programs set as above or the sport advertisement may be repeatedly distributed as indicated by the number of programs. The example of FIG. 8 shows programs to be distributed at about 12:00, i.e., shortly before and after 12:00. In this example, the images ranging from the left-most image to the right-most image (an extra) are distributed as a sequence of programs and are repeatedly distributed as a scroll until subsequent distribution is conducted. It is hence possible to display these programs.

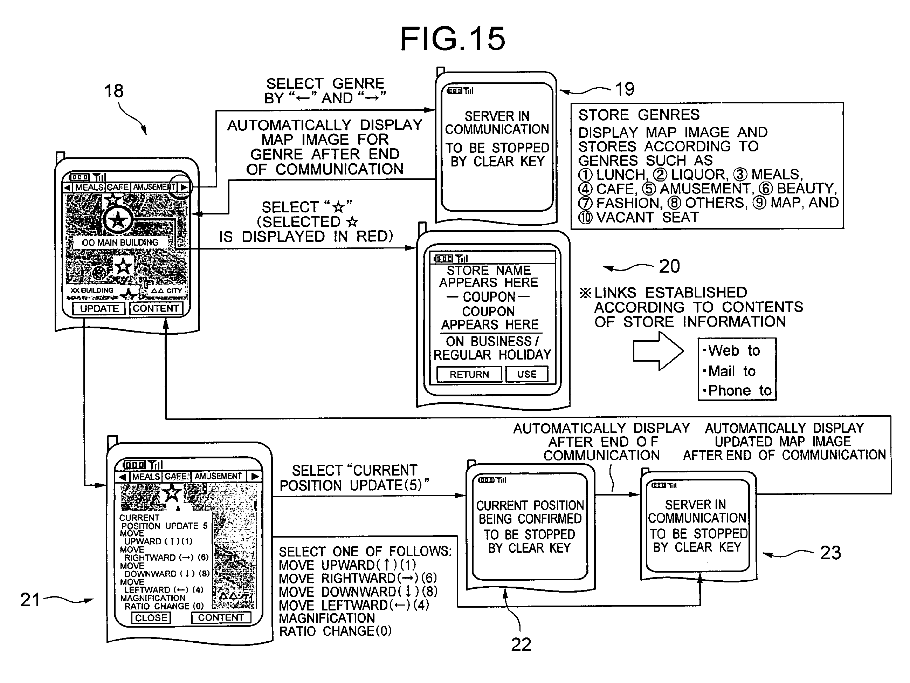

Transition of icon selection may also be conducted as below. Symbols such as "upward (↑)" indicate functions shown in the example of FIG. 15. Upward (↑): Transition to an icon displayed above on the screen. At a position of a higher-most icon, this indicates transition to a lower-most icon. Downward (↓): Transition to an icon displayed below on the screen. At a position of a lower-most icon, this indicates transition to a higher-most icon.

Thereafter, the portable terminal 200 having the information of at least the distribution desired time of the information of the program list (distribution table) transmits a portable terminal user ID to the system 100 at a pertinent time according to the distribution desired time information (S304). On the other hand, the system 100 receives (request information including) the portable terminal user ID (S305) and then retrieves, according to the portable terminal user ID, the program list (distribution table) 1000 linked with the portable terminal user in the program list (distribution table) database 125 (S306).

The system 100 identifies the digital content set to the distribution desired time in the program list (distribution table) 1000 retrieved as above and extracts the digital content from the digital content database 126 (S307). The system 100 transmits the digital content 1100 to the portable terminal 200 (S308) and then terminates the processing.

On the other hand, the portable terminal 200 receives the digital content of the distribution desired time transmitted from the system 100 to display the digital content on an output interface (S309) and then terminates the processing.

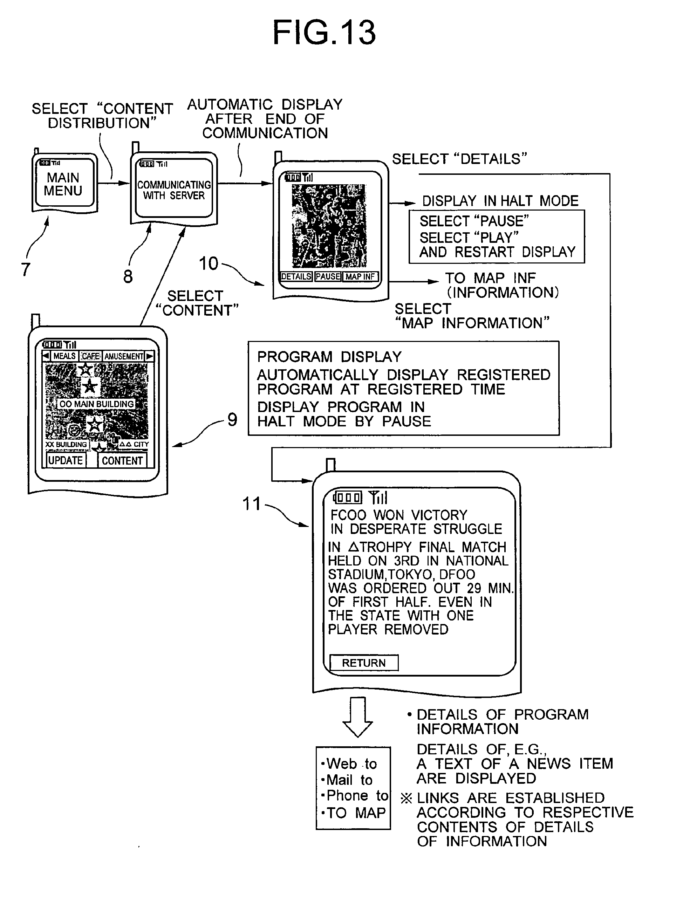

Next, referring to a screen transition example of FIG. 13, description will be given of an operation in which the portable terminal 200 having received the digital content 1100 outputs the digital content 1100 therefrom. Assume in this situation that the portable terminal 200 has issued a distribution start instruction for the digital content 1100, for example, on the main menu screen 7 of the system 100. The portable terminal 200 is communicating data with the system 100 to transmit information of a portable terminal user ID thereof and distribution time to the system 100 (screen 8). The system 100 extracts associated digital content 1100 to distribute the digital content 1100 to the portable terminal 200 (screen 10). If an instruction to distribute map information is beforehand issued on the screen 7 of the main menu, map data 1150 is being displayed on the display 250 of the portable terminal 200 as shown in screen 9. The map data 1150 has been stored as one kind of digital content 1100 in the digital content database 126 and is extracted therefrom to be displayed in response to reception of, for example, position information from the portable terminal 200 or in response to an instruction of a predetermined facility (e.g., a landmark). In the screen 9 of the map data 1150, even if a distribution start instruction button of, for example, "content" is pushed, the system executes screen transition to the screen 8.

In an operation to display the digital content 1100 on the portable terminal display 250 of the portable terminal 200, the system receives depression of an instruction button "PAUSE" or "DETAILS" to temporarily stop the processing for detailed information of the digital content 1100 (screen 11) or the processing of scrolling the digital content 1100. If the contents of the detailed information include a Uniform Resource Locator (URL), a mail address, or a telephone number of the contact address to make contact with the communicating party, the system 100 displays a command link, for example, "Mail to", "Web to", or "Phone to" so that a processing execution instruction is received.

### --- Processing flow example 2 ---

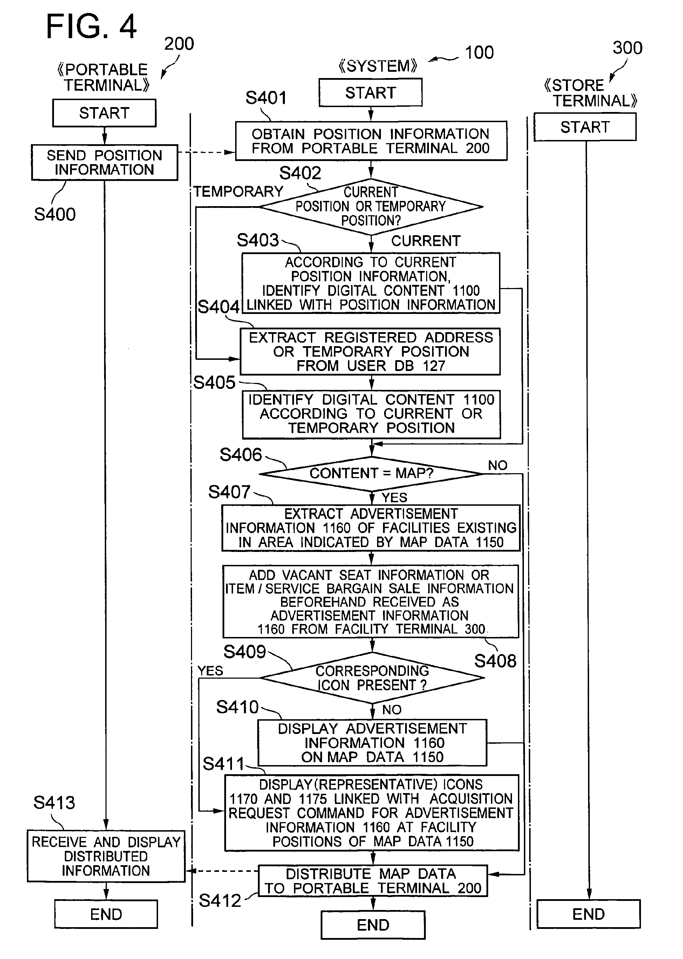

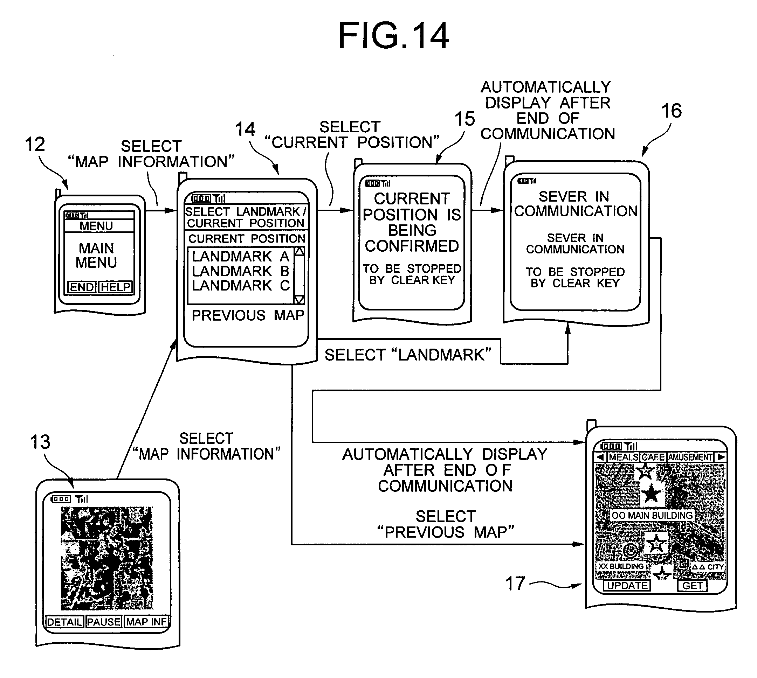

FIG. 4 is a flowchart showing procedure example 2 to conduct the digital content distribution method of the embodiment. Next, description will be given of processing to efficiently and securely conduct distribution of the digital content 1100 as well as distribution of map data 1150 and advertisement information 1160 in association with, for example, position information of the portable terminal 200. In this situation, the portable terminal 200 first obtains information of a current position from a current position acquiring device such as a GPS device 150 installed in the portable terminal 200. Or, the portable terminal 200 receives from an input interface an input of the portable terminal user, the input regarding a temporary position such as a travel destination or a business trip destination to thereby obtain the information. The portable terminal 200 transmits the position information to the system 100 (S400). The portable terminal 200 may receive via an input interface, in place of the GPS information, designation of landmarks (such as a station, a government office, and a high-rise building of which positions are beforehand registered as shown in screens 12 to 17 of FIG. 14. The portable terminal 200 may treat the designation as current position information.

On the other hand, the system 100 receives the position information transmitted from the portable terminal 200 (S401) and determines whether the position information indicates a current position or a temporary position by comparing the position information, for example, with a registered address in the user database 127 (S402). If the position information is the current position information as a result of the determination (Current in step S402), the system 100 identifies, according to the current position information, digital content 1100 linked with the position information in the digital content database 126 (S403).

If the position information is the temporary position information (Temporary in step S402), the system 100 extracts a registered address or a temporary position of the portable terminal user from the user database 127 (S404) and then identifies, according to the registered address or the temporary position, digital content 1100 in the digital content database 126 (S405).

The system 100 then makes a check to determine whether or not the digital content 1100 thus identified is map data (S406). If the digital content 1100 is not map data (NO in step S406), the system 100 distributes the identified digital content 1100 to the portable terminal 200 (S412) to thereby terminate the processing. In this connection, step S406 may be dispensed with. That is, the system 100 may conduct the control operation to display the map data even in the absence of the user's designation.

If the digital content 1100 is map data (YES in step S406), the system 100 extracts from the advertisement database 128 advertisement information 1160 of various stores (facilities) existing in a zone indicated by the map data 1150 (S407). The processing is executed by retrieving from the advertisement database 128 the advertisement information 1160 linked with position information which matches data in the "position information" column of the digital content 1100.

From the vacant seat information (or item/service bargain sale information) of the pertinent store beforehand received from the store terminal 300, the system 100 obtains the vacant seat information (or item/service bargain sale information) for the stores requesting the extracted advertisement information 1160 to add the obtained vacant seat information (or item/service bargain sale information) to the advertisement information 1160 (S408).

The system 100 then makes a check to determine presence or absence of an icon 1170 corresponding to the extracted advertisement information 1160 (S409). The icon 1170 is image data related to an acquisition request command of the advertisement information 1160. It is possible to assume a state in which the icon 1170 is stored in the advertisement database 128 with a correspondence established, for example, between the image data and each advertisement information 1160 in the advertisement database 128. Therefore, the system can execute processing of step S409 by verifying presence or absence of an icon 1170 linked with the advertisement information 1160 in the advertisement database 128.

If such corresponding icon is absent in the determination (NO is step S409), the system 100 executes processing to directly display the advertisement information 1160 on the map data 1150 (S410) and distributes the resultant data to the portable terminal 200 (S412) to thereby terminate the processing.

If such corresponding icon is present in the determination (YES is step S409), the system 100 executes processing to display the icon 1170 related to the acquisition request command of the advertisement information 1160 on the position of the store in the map data 1150 (S411) and distributes the resultant data to the portable terminal 200 (S412) to thereby terminate the processing. In this regard, step S411 also includes processing as below.
(1) Displaying information items at predetermined positions on the screen, the information items respectively corresponding to a plurality of icons (at least part thereof) represented by a representative icon.
(2) Displaying a plurality of icons (at least part thereof) represented by a representative icon. It is possible in the operation that the magnification factor of the map or the size of the icons is changed to reduce overlapping between the icons when the icons are displayed.

As another example of the icon, there can be assumed a representative icon 1175 related to an acquisition request command of the advertisement information 1160 of each store for a group of stores existing in a predetermined range of positions. Also in this case, the system 100 executes processing to display the representative icon 1175 on the position in the map data and then distributes the resultant data to the portable terminal 200.

The portable terminal 200 receives the data collectively including the map data 1150, the icons 1170, 1175, etc., and the representative icon 1170 distributed from the system 100 and then displays the data on the portable terminal display 250 (S413) to thereby terminate the processing. In this situation, the screen image on the portable terminal display 250 is, for example, as shown in screen 17 of FIG. 14.

There can be assumed a state in which information of browsing history of the user database 127 shown in FIG. 2C also includes browsing history of the map data 1150. In such case, it is also possible that the system 100 recognizes attributes (e.g., an area indicated by the map data and a moving path when the map data is being continuously browsed) of the map data 1150 in the browsing history to execute processing in which either one of the digital content 1100, the map data 1150, and the advertisement information 1160 corresponding to the attributes is extracted from the digital content database 126 or the advertisement database 128 to be distributed to the portable terminal 200.

### --- Processing flow example 3 ---

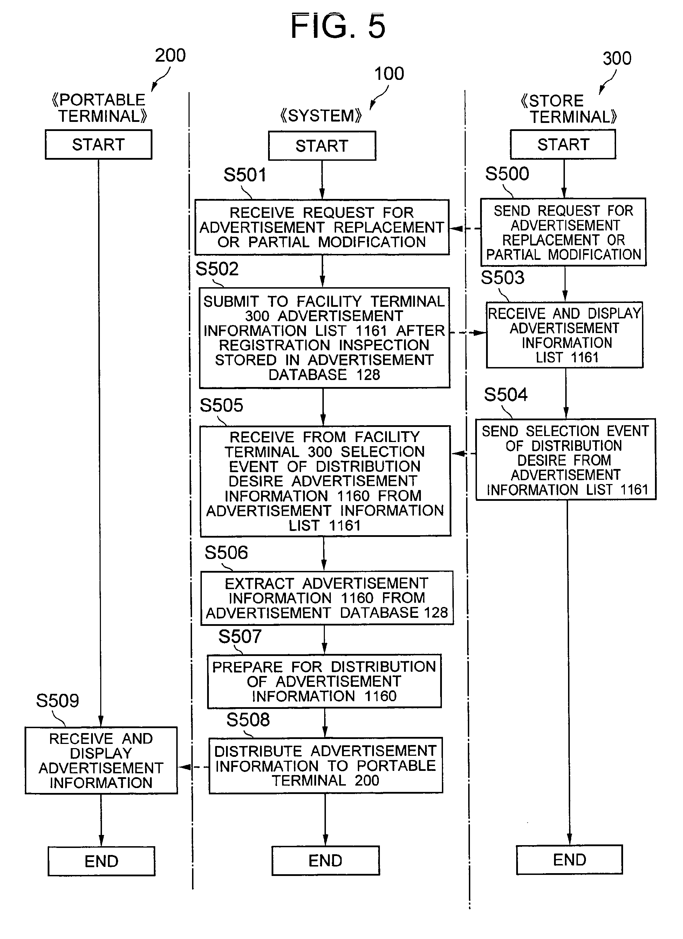

FIG. 5 shows, in a flowchart, procedure example 3 to conduct the digital content distribution method of the embodiment. Description will now be given of processing to replace and to correct the advertisement information 1160 to be added to the digital content 1100. First, the store terminal 300 transmits to the system 100 a request of replacement or partial modification of an advertisement for the store (S500). The system 100 receives the request (S501), creates an advertisement information list 1161 after inspection for registration stored in the advertisement database 128, and submits the advertisement information list 1161 to the store terminal 300 (S502, S503).

The advertisement information list 1161 is a list of advertisement information items determined on the system administration side that the advertisement information items may be broadly distributed to the public as advertisements in consideration of, for example, codes of advertisement ethics. That is, the sponsor of the store or the like cannot distribute all kinds of advertisement information 1160. On the other hand, it is not feasible to inspect quite a large number of advertisement information items 1160 in a real-time fashion. Therefore, a plurality of advertisement information items 1160 are beforehand inspected, for example, for each store terminal 300. The system 100 maintains the advertisement information items 1160 passed the inspection.

It is assumed, for example, a word or a phrase underscored in the column of advertisement contents of the advertisement database 128 as shown in FIG. 2D is linked with, for example, a pull-down menu of an item list or a discount list of the store so that the store terminal 300 side can freely select an item name or a discount rate (passed the registration inspection) constituting the word or phrase of the advertisement information. When the system executes the processing, it is possible to directly receive an advertising strategy considered on the store side according to results of effect of the advertisement and the weather.

To conduct the processing above, the system 100 receives from the store terminal 300 a selection event of distribution desired advertisement information from the advertisement information list 1161 (S504, S505) and extracts the pertinent advertisement information 1160 from the advertisement database 218 (S506). The system 100 also conducts preparation for distribution in which the system 100 selects digital content 1100 matching in an attribute with the extracted advertisement information to confirm the distribution time for the advertisement information and the digital content 1100 (S507). If the distribution preparation is completed, the system 100 distributes the advertisement information 1160 to the portable terminal 200 (S508) and then terminates the processing.

On the other hand, the portable terminal 200 receives the advertisement information 1160 and displays the advertisement information 1160, for example, on the portable terminal display 250 (S509) to thereby terminate the processing.

### --- Processing flow example 4 ---

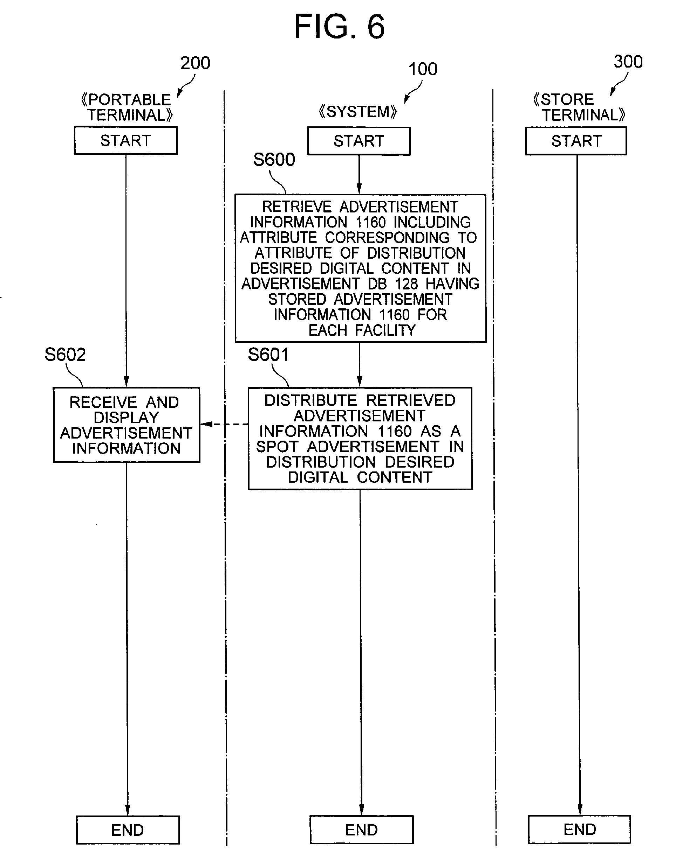

FIG. 6 shows, in a flowchart, procedure example 4 to conduct the digital content distribution method of the embodiment. Description will be simply given of attribute matching processing between the digital content 1100 and the advertisement information 1160. In this situation, the system 100 retrieves, from the advertisement database 128 having stored the advertisement information 1160 of each store, the advertisement information 1160 including an attribute linked with an attribute of the distribution desired digital content beforehand received from the portable terminal 200 (S600). The system 100 distributes the retrieved advertisement information 1160 to the portable terminal 200 as a spot advertisement in the distribution desired digital content (S601) and then terminates the processing. It is possible to assume that the attribute matching processing is executed by paying attention to at least either one of the links between the digital content 1100, the map data 1150, and the advertisement information 1160 in the digital content distribution method of the present invention. On the other hand, the portable terminal 200 receives the advertisement information 1160, for example, on the portable terminal display 250 (S602) to thereby terminate the processing.

### --- Processing flow example 5 ---

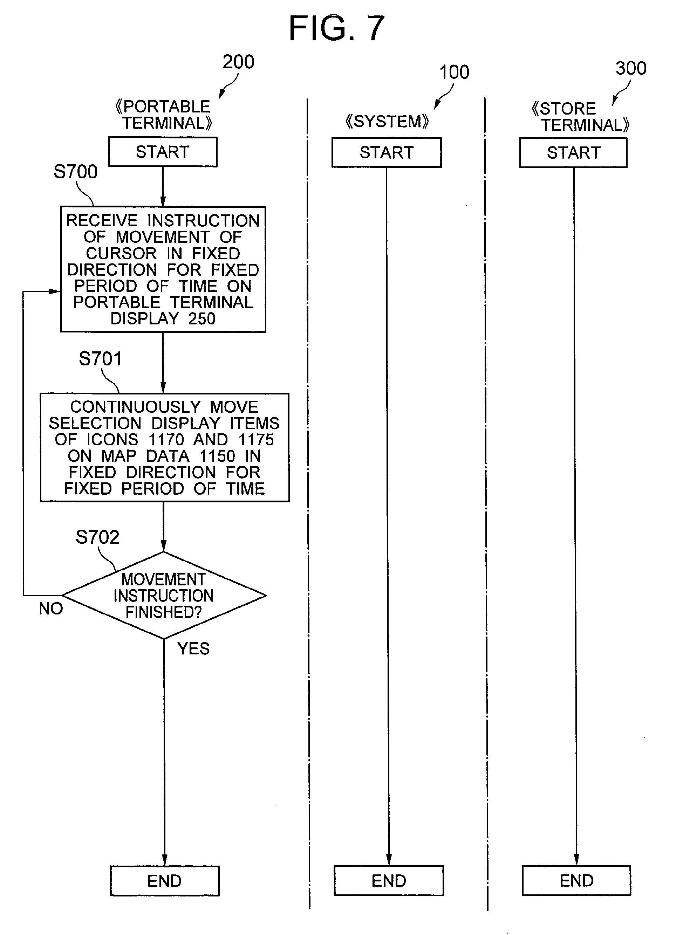

FIG. 7 shows, in a flowchart, procedure example 5 to conduct the digital content distribution method of the embodiment. Description will be given of a technique to improve usability of the digital content 1100 displayed on the portable terminal 200. Assume that the digital content 1100 distributed from the system 100 is map data 1150 in which an icon 1170 linked with an acquisition request command of the advertisement information 1160 of various stores is displayed at a position of the store. At this point of time, the portable terminal 200 receives from an input interface a movement instruction of a cursor in a fixed direction for a fixed period of time on the portable terminal display 250 (S700).

The portable terminal 200 continuously moves selection display items of a plurality of icons 1170 and 1175 arranged on the map data 1150 in the fixed direction for a fixed period of time (S701). The processing is repeatedly executed until the movement instruction is finished (NO in step S702; control goes to step S700). If the movement instruction is finished (YES in step S702), the processing is terminated.

Specifically, for example, as shown in screens 18 to 23 of FIG. 15, cursor keys (an arrow key and a predetermined numeric key) of the portable terminal 200 correspond to the fixed direction (vertical or horizontal direction). According to a period of time (fixed period of time) of depression of either one of the cursor keys, the selection display items of the icon 1170 and the representative icon 1175 are continuously changed on the portable terminal display 250. The continuous change or transition is conducted such that during a period of time in which, for example, the "downward" cursor key is kept depressed, the icon selection is changed from the icon 1170 displayed in an upper region of the display 250 to the icon 1170 nearest to the icon 1170 (irrespectively of whether the nearest icon is on the right side or on the left side of the icon 1170). The transition may also be conducted as below. Coordinates of positions at which the icons are displayed are determined such that the icon selection is changed to an icon nearest to a predetermined position and is then changed to an icon next nearest thereto, and so on. It is possible that the icon selection is changed, for example, in a direction from an upper-left corner of an ordinary display screen to a lower-right corner thereof.

It is also possible to assume a situation wherein the map data 1150 includes a program which receives from the portable terminal 200 a movement instruction of a cursor in a fixed direction for a fixed period of time on the portable terminal display 250. The program continuously moves the selection display items of the plural icons 1170 and 1175 arranged on the map data 1150 in the fixed direction for the fixed period of time.

### --- Scroll speed control ---

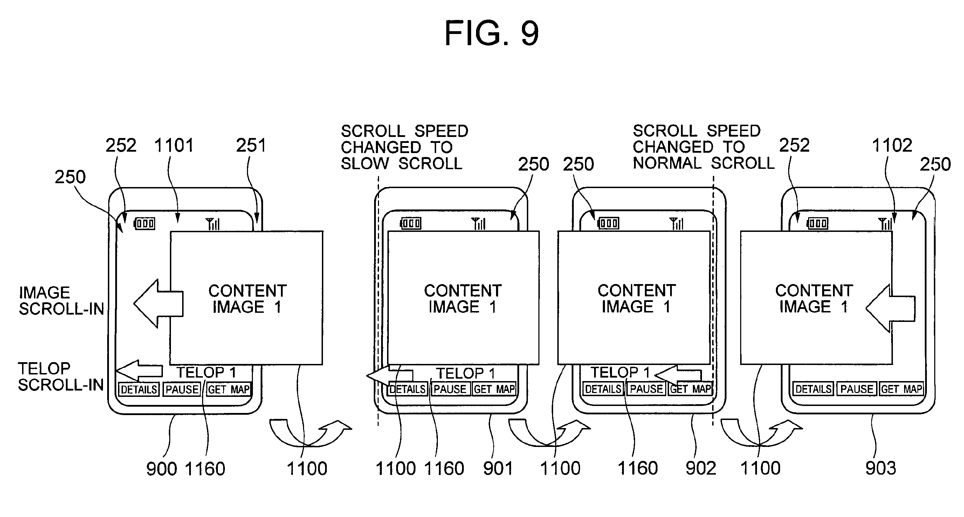

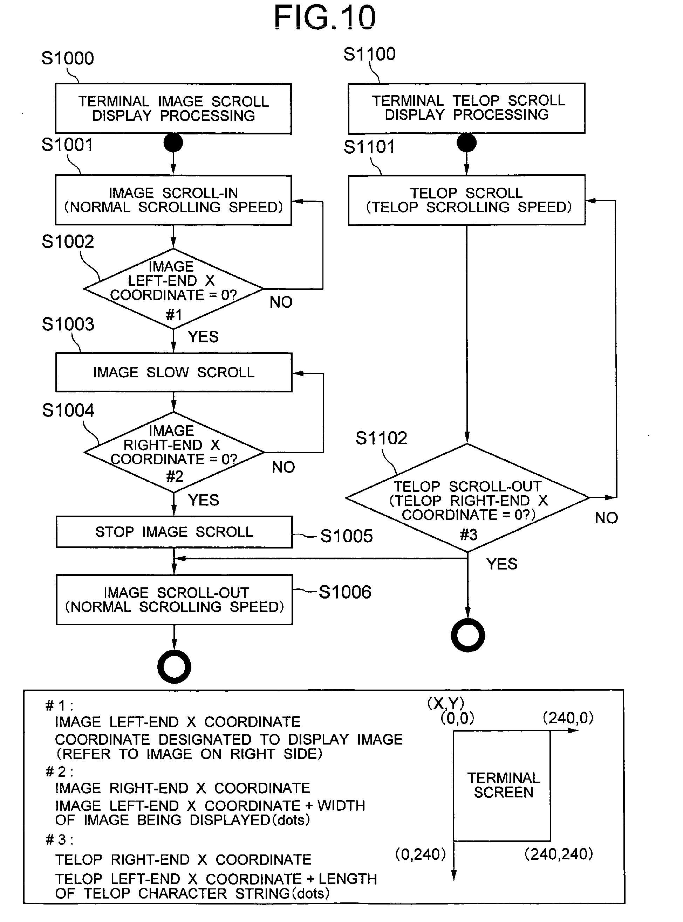

FIG. 9 shows images of operation to control the digital content scrolling operation in the embodiment. FIG. 10 shows, in a flowchart, procedure example 6 to conduct the digital content distribution method of the embodiment. Description will now be given of a technique to improve visibility of the digital content 1100 automatically displayed on the portable terminal display 250. The digital content 1100 of the embodiment is distributed from the system 100 to the portable terminal 200 and is then displayed to be scrolled in a fixed direction on the portable terminal display 250 (although this is only an example of operation).

In the operation, if the scrolling speed is too high, it is difficult for the portable terminal user to browse the data content 1100. Contrarily, if the scrolling speed is too slow, the portable terminal user cannot endure redundant processing and possibly interrupts the operation of the browsing of the digital content 1100 depending on cases. It is consequently required to control the scrolling speed suitable for the browsing operation.

Therefore, the portable terminal 200 scrolls the digital content 1100 of, for example, a content image distributed from the system 100 at least at a speed such that the end 1101 of the content 1100 moves from the first end 251 of the portable terminal display 250 to the second end 252 thereof within a predetermined period of time (screens 900 and 901) as shown in FIG. 9. After the end 1101 of the content 1100 reaches the second end 252, the portable terminal 200 scrolls the content 1100 at most at a speed such that the other end 1102 of the content 1100 reaches the second end 252 of the portable terminal display 250 within at least a predetermined period of time (screens 902 and 903).

In this regard, it is also possible to assume a situation in which the digital content 1100 includes a program 1110 to scroll the content at least at a speed such that the end 1101 of the content moves from the first end 251 of the portable terminal display 250 to the second end 252 thereof within a predetermined period of time and a program 1111 to scroll the content at most at a speed such that after the end 1101 of the content reaches the second end 252, the other end 1102 of the content reaches the second end 252 of the portable terminal display 250 within at least a predetermined period of time.

Next, details of the procedure will be described by referring to FIG. 10. The portable terminal 200 starts processing at an ordinary scrolling speed to conduct a scroll display operation for a content image and a telop (advertisement information 1160 of characters) of the digital content 1100 (steps S1000, S1001, S1100, and S1101). The portable terminal 200 makes a check to determine whether or not an X coordinate value at a left end of the content image (corresponding to the number of dots of the image) is "0" (S1002). As a result of the determination, if the X coordinate value at the left end of the content image is not "0" in the screen coordinate system (NO in step S1002), control returns to step S1001. On the other hand, if the X coordinate value at the left end of the content image is "0" in the screen coordinate system (YES in step S1002), it is to be appreciated that the left end of the content image has reached the second end 252 of the display 250. In this situation, the portable terminal 200 changes the scrolling speed of the content image to a lower speed, i.e., "slow scroll" (step S1003).

The slow scroll continues until the coordinate value at a right end of the content image becomes "0" (YES in step S1004). If the coordinate value at a right end of the content image becomes "0", the portable terminal 200 stops the image scrolling operation (step S1005). On the other hand, in the telop scrolling operation, if the coordinate value at a right end of the telop becomes "0", that is, if "scroll-out" takes place for the telop (YES in step S1102), the portable terminal 200 causes "scroll-out" also for the content image (S1006) to thereby terminate the processing. After the "scroll-out" of the content image and the telop, the portable terminal 200 conducts "scroll-in" for a subsequent content image and a telop.

Specific examples of scrolling speeds include 20 dots per 30 milliseconds (ms) for the ordinary scrolling of an image (until the screen is scrolled up to the left end), one dot per 30 ms for the slow scrolling of an image (after the screen is scrolled to the left end), and three dots per 30 ms for the scrolling of a telop. In this situation, the portable terminal 200 executes processing to draw, for example, a content image and the like in units of 30 ms.

According to the present invention, in the setting of distribution contents and the distribution time for digital content, data processing efficiency is increased and operability are improved for users. It becomes feasible that the distribution processing is efficiently executed according to, for example, a position of a portable terminal. Also, there can be attained excellent usability for digital content and advertisements.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A digital content distribution system for distributing digital content to a portable terminal (200), comprising:
a distribution table storage section (110) for storing a distribution table in a distribution table database (125) for each portable terminal user, the distribution table including distribution desired digital content which is identified by designation regarding distribution desired digital content and which is listed in time series; and
a distribution processing section (1111) for distributing, when request information requesting distribution is received from the portable terminal, the distribution desired digital content listed in the distribution table to the portable terminal.

2. The digital content distribution system according to claim 1, further comprising:
a user IDentifier (ID) receiving section (112) for receiving a portable terminal user ID as the request information, the portable terminal user ID being transmitted from a portable terminal including at least information of a distribution desired time of information of the distribution table at an associated time based on the information of the distribution desired time; and
a distribution content identifying section (113) for retrieving, according to the portable terminal user ID, a distribution table related to the portable terminal user in the distribution table database and for identifying associated digital content set to the distribution desired time in the distribution table, wherein
the distribution processing section extracts the associated digital content thus identified from the digital content database and transmits the associated digital content to the portable terminal.

3. The digital content distribution system according to claim 1, further comprising:
a desired time receiving section (114) for receiving, from a portable terminal including at least information of a distribution desired time of information of the distribution table, the information of a distribution desired time being received as the request information; and
an actual distribution time calculating section (115) for calculating an actual distribution time on the basis of the number or a reception sequence of request information items received for a time zone including the distribution desired time, the actual distribution time being apart by at least a predetermined period of time from distribution execution based on another request information item in the time zone, wherein
the distribution processing section extracts associated digital content based on the request information from the digital content database and transmits the associated digital content to the portable terminal at the actual distribution time.

4. The digital content distribution system according to claim 1, further comprising a position corresponding content distribution section (116) for acquiring, from a portable terminal, current position information of the portable terminal; identifying digital content linked with position information in the digital content database, on the basis of the current position information; and transmitting the digital content to the portable terminal.

5. The digital content distribution system according to claim 4, wherein the position corresponding content distribution section extracts from a user database (127) a registered address or a temporary position of a portable terminal user beforehand received from a portable terminal, identifies digital content in the digital content database on the basis of the registered address or the temporary position (FIG. 2C), and distributes the digital content to the portable terminal.

6. The digital content distribution system according to claim 5, wherein:
the position corresponding content distribution section distributes map data as digital content, and
the position corresponding content distribution section extracts advertisement information items of various facilities existing in an area indicated by the map data from an advertisement database (128) having stored advertisement information items of the respective facilities, and distributes the map data with the advertisement information items displayed on the map data, to the portable terminal.

7. The digital content distribution system according to claim 6, wherein the position corresponding content distribution section distributes an icon related to an acquisition request command of the advertisement information to the portable terminal, the icon being displayed at a position of an associated facility in the map data.

8. The digital content distribution system according to claim 7, wherein the position corresponding content distribution section distributes, to the portable terminal to the portable terminal, one representative icon (1170, 1175) related to an acquisition request command of each of facilities collectively existing at positions in a predetermined range, the icon being displayed at the position in the map data.

9. The digital content distribution system according to claim 8, wherein the position corresponding content distribution section distributes the advertisement information to the portable terminal, the advertisement information including at least either one of vacant seat information and item/service bargain sale information of the facility beforehand received from a terminal of the facility.

10. The digital content distribution system according to claim 9, further comprising a selected advertisement distribution section (117) for presenting an advertisement information list which is stored in the advertisement database and for which registration inspection is completed to the terminal of the facility, receiving from the terminal of the facility a selection event of distribution desired advertisement information to be selected from the advertisement information, extracting the distribution desired advertisement information from the advertisement database, and distributing the distribution desired advertisement information to the portable terminal.

11. The digital content distribution system according to claim 7, wherein the position corresponding content distribution section distributes map data including a program (FIG. 4) to the portable terminal,
the program receiving from the terminal a movement instruction of a cursor in a fixed direction for a fixed period of time on a portable terminal display and continuously moving a selection display item of each of a plurality of icons disposed on the map data in the fixed direction for the fixed period of time.

12. The digital content distribution system according to claim 1, wherein the digital content stored in the digital content database comprises:
a program (FIGS. 8-9) for scrolling the content at least at a speed such that an end of the content moves from a first end of the portable terminal display to a second end thereof within a predetermined period of time; and
a program (FIGS. 8-9) for scrolling the content at most at a speed such that after the end of the content reaches the second end, another end of the content reaches the second end of the portable terminal display within at least a predetermined period of time.

13. The digital content distribution system according to claim 11, further comprising a spot advertisement distribution section (118) for retrieving advertisement information including an attribute linked with an attribute of the distribution desired digital content in an advertisement database having stored advertisement information of each facility, and distributing the advertisement information as a spot advertisement in the distribution desired digital content.

14. A digital content distribution method of distributing digital content to a portable terminal by a computer, comprising the steps of:
storing a distribution table in a distribution table database for each portable terminal user, the distribution table including distribution desired digital content which is identified by designation regarding distribution desired digital content and which is listed in time series (FIG. 3); and
distributing, when request information requesting distribution is received from the portable terminal, the distribution desired digital content listed in the distribution table to the portable terminal (FIG. 3).

15. A portable terminal (200) for receiving digital content from a digital content distribution system (100), comprising:
a distribution desired transmitting section (210) for transmitting designation regarding distribution desired digital content and a distribution desired time to the digital content distribution system; and
a reception processing section (211) for receiving the digital content desired to be distributed at the distribution desired time according to a distribution table, the distribution table being created by the digital content distribution system and including the distribution desired digital content listed in time series to be distributed within a predetermined period of time.

16. The portable terminal according to claim 15, further comprising a position information acquiring section (214) for acquiring current position information from a current position information acquiring device (150) and transmitting the current position information to the digital content distribution system.

17. The portable terminal according to claim 16, further comprising a selective movement processing section (212) for receiving, if the digital content distributed from the digital content distribution system is map data in which icons related to an acquisition request command of advertisement information of various facilities are displayed at positions of the facilities, a movement instruction of a cursor in a fixed direction for a fixed period of time on a portable terminal display and continuously moving a selection display item of each of a plurality of icons disposed on the map data in the fixed direction for the fixed period of time.

18. The portable terminal according to claim 15, further comprising a scroll speed control section (213) for scrolling the content distributed from the digital content distribution system, at least at a speed such that an end of the content moves from a first end of a portable terminal display to a second end thereof within a predetermined period of time and scrolling the content at most at a speed such that after the end of the content reaches the second end, another end of the content reaches the second end of the portable terminal display within at least a predetermined period of time.
